# EUROPEAN PATENT SPECIFICATION

(11) **EP 1 428 351 B1**
(45) Date of publication and mention of the grant of the patent: **07.01.2009**
(21) Application number: 02765728.7
(22) Date of filing: 21.08.2002
(51) Int. Cl.: H04L 12/28

(54) **AN INTERFACE FOR LOCAL AREA NETWORKS**
SCHNITTSTELLE FÜR LOKALE NETZWERKE
INTERFACE POUR RESEAUX LOCAUX D'ENTREPRISES

(30) Priority: 07.09.2001 SE 0102978
(43) Date of publication of application: 16.06.2004
(73) Proprietor: TELIASONERA AB, 106 63 Stockholm (SE)
(72) Inventor: SCHUH, Ralf, S-227 62 Lund (SE); SUNDBERG, Erland, S-136 54 Haninge (SE); VERRI, Bertil, S-137 38 Västerhaninge (SE); ARKNER, Tommy, S-135 34 Tyresö (SE)
(74) Representative: Hopfgarten, Nils
(86) International application number: PCT/SE2002/001509
(87) International publication number: WO 2003/024027

(56) References cited:
- EP-A1- 0 760 587
- EP-A1- 0 792 048
- EP-A2- 0 421 602
- EP-A2- 0 684 714
- GB-A- 2 300 549
- US-A- 5 822 678
- US-A- 5 983 070
- SHANKARANARAYANAN N.K. ET AL: 'Multiport wireless access system using fiber/coax network for personal communications services (PCS) and subscriber loop applications' IEEE GLOBAL TELECOMM. CONF. vol. 2, November 1995, pages 977 - 981, XP000622939

## Description

### FIELD OF THE INVENTION

The present invention relates in general to distribution of radio signals between terminals and Base Stations, BSs, via Local Area Networks, LAN, more particular to an interface that can handle combined digital and analogue Radio Frequency, RF, signals for transmission over fibre based LANs.

### BACKGROUND

Passive and active Distributed Antenna Systems (DAS) using coax or optical fibre are currently often used for Global System for Mobile communications (GSM) indoor coverage. These DASs are using a separate fibre - coax architecture to the e.g. digital Local Area Network (LAN) architecture. Multiple infrastructures are adding up in the price and increase the operation and maintenance cost.

GSM-dn-the-Net uses the existing LAN architecture by connecting pico base stations to the LAN. The radio signal is distributed digitally in such a radio LAN architecture. For GSM-on-the-Net a special gateway is needed in order to ensure security from the intranet to the public network. The number of transceiver units in a pico base station is currently limited to a maximum of two transceivers. Moreover, GSM-on-the-Net cannot make use of trunking efficiency.

In buildings there are often many different cabling systems deployed, for supporting different applications:
• For LANs, Ethernet and Fibre Distributed DATA Interface (FDDI) the dominant digital transmission standards are IEEE 803.3 Gigabit Ethernet Standard and ANSI X3T12 FDDI Standard which are defined for Category 5 cable, copper twisted pair, CAT5, fibre and coax cabling.

In the European patent application EP 792 048, "Point-routeur multiprotocoles poure reseaux indudtriels", inventor J Alexandre, is described a system for transmitting signals having different protocols on the same optical fibre. One embodiment can distribute analogue and digital signals, modulated on different bearer waves on the same optical fibre.

GB 2 300 549 A discloses CATV distribution network which provides an interface between a cellular communications base station and a plurality of mobile terminals. A head end signal processor disposed at a head end of the CATV network provides a first frequency conversion between a cellular communications radio frequency and the CATV network transmission frequency. A plurality of remote antenna drivers are disposed at the remote end of the CATV network and provide a second frequency conversion between the cellular communications radio frequency and the CATV network transmission frequency.

### SUMMARY OF THE INVENTION

The present invention provides an interface as defined in the enclosed claim 1, and a system as defined in the enclosed claim 7.

The present invention relates to a common digital and radio signals distribution architecture using standard Local Area Network (LAN) architecture and equipment for distributing the radio signals to remote antennas.

The present invention is using a common interface for the digital and radio signal distribution. This interface can solve multiple infrastructure problems by distributing radio signals (e.g. GSM, UMTS) between a Base Transceiver station (BTS) and its remote antennas over the fibre based LAN infrastructure. The interface is integrated in the LAN equipments (e.g. Ethernet switch or Ethernet coax to fibre media converter). Fibre in general offers a huge bandwidth and can accommodate both the digital and radio signal transmission.

The present invention uses an integrated digital and analogue Radio Frequency (RF) interface for transmitting combined digital and analogue RF signals over fibre based LANs. The RF signals are fed/received to/from optical transceiver(s) over a separate electrical RF port. The digital and analogue RF signals are distributed over the fibre-cable LAN architecture. Radio cell architecture can be built-up by connecting antennas to the electrical RF ports at the LAN equipment. The architecture itself is transparent to the transmission of RF signals.

The present invention uses existing LAN architecture (cabling and devices), which enables low cost radio signal distribution e.g. for Distributed Antenna Systems (DASs) in buildings. The digital and radio signals are separated in the frequency domain or can be separated in the space domain by using different transceiver units in the LAN equipment or fibres in the cable. The present invention is a Distribution of Radio Signals using Local Area Network Infrastructure (DoRSuLANI) here called the interface.

One advantage by using this interface is that no gateways to the public network is needed, e.g. if compared with GSM-on-the-Net, because the radio and digital signals can be separated in the frequency domain or in the space domain by using different transceiver units in the LAN equipment. The interface can also make use of trunking efficiency as the Base Station (BS) can be centralized.

Multiple infrastructures with separate cabling and access points, e.g. fibre based LAN and passive coax DAS, are not needed. The invention allows a single cabling infrastructure with common access points.

The invention allows reduced installation, deployment and operation and maintenance (OAM) costs. The LAN can be public or private.

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:
Figure 1 shows an overview of the interface,
Figure 2 shows a FDDI backbone network with interfaces, that allow distribution of the digital and radio signal to different buildings,
Figure 3 shows a typical Ethernet LAN architecture within a building,
Figure 4 shows measurement set-up for the combined simultaneous digital-radio transmission using standard Gigabit Ethernet components,
Figure 5 shows intermodulation attenuation for GSM and interfering CW signal transmission over the fibre link,
Figure 6 shows BER versus received RF power for the GSM 1800 signal, measured with TEMS,
Figure 7 shows BER versus received optical power for 1 Gbit/sec data transmission (PRBS = 2²³-1), for back-to-back and 60.0 meter MM fibre,
Figure 8 shows a link budget calculation for typical GSM in-building,
Figure 9 shows a set-up using the interface with 4 antennas,
Figure 10 shows path loss versus distance,
Figure 11 shows second set-up for figure 9,
Figure 12 shows third set-up for figure 9, and
Figure 13 shows fourth set-up for figure 9.

### DETAILED DESCRIPTION

The following abbreviations are used:
- BER: Bit Error Rate
- BS: Base Station
- BTS: Base Transceiver station
- CAT5: Category 5 cable, copper twisted pair
- CPU: Central Processing Unit
- DAS: Distributed Antenna System
- DR: Dynamic Range
- DWDM: Dense Wavelength Division Multiplexing
- FDDI: Fibre Distributed DATA Interface
- FTTS: Fibre-to-the-Subscriber
- GSM: Global System for Mobile communications
- IMD: Intermodulation Distortion
- LAN: Local Area Network
- MAN: Metropolitan Area Networks
- MM: Multi-mode fibre
- OAM: Operation and Maintenance
- PRBS: Pseudorandom Bit Sequence
- RF: Radio Frequency
- TEMS: Test Mobile Station
- TRx: Transceiver
- VCSEL: Vertical Cavity Surface Emitting Laser
- WAN: Wide Area Network
- WDM: Wavelength Division Multiplexing

Referring now to the drawings, wherein like reference numerical designate identical or corresponding parts throughout the several views.

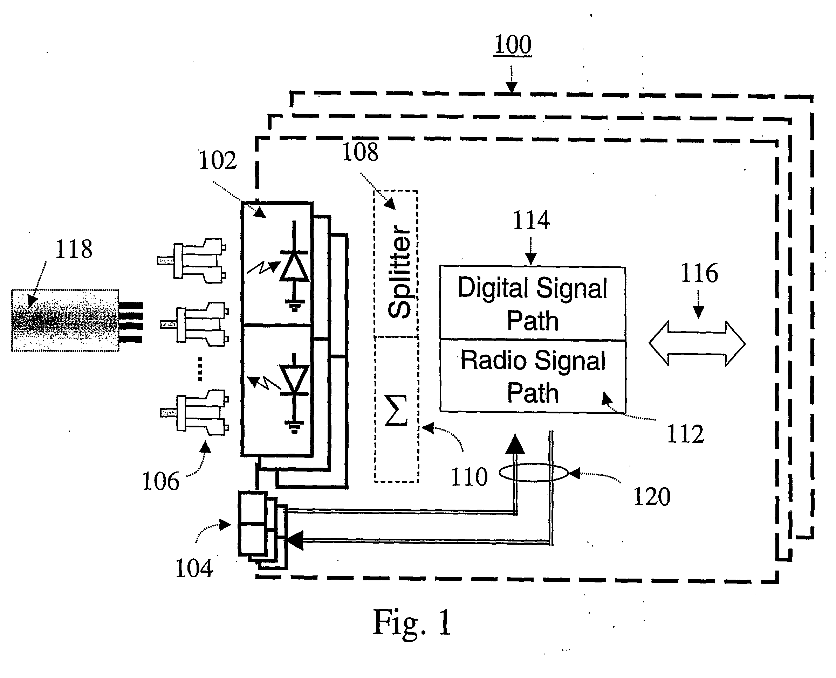

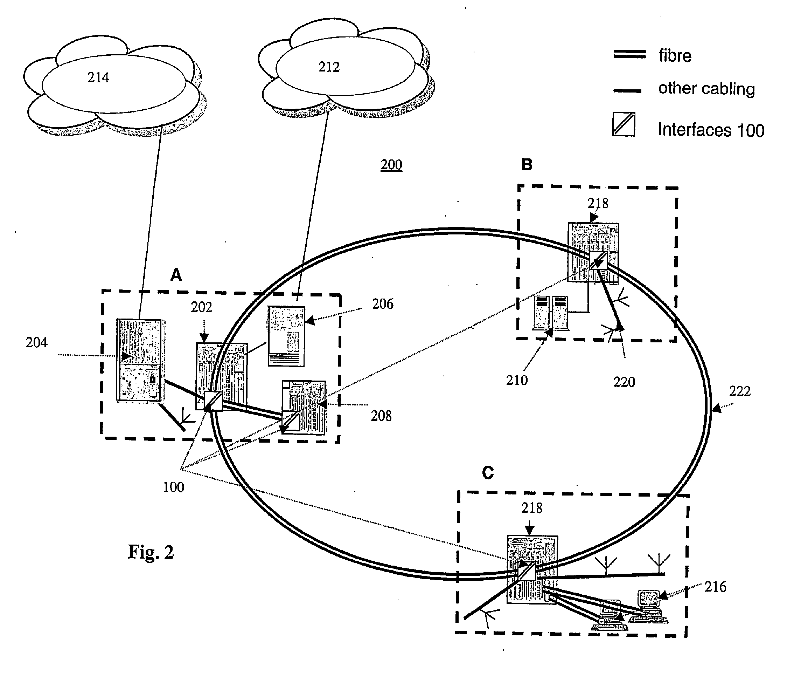

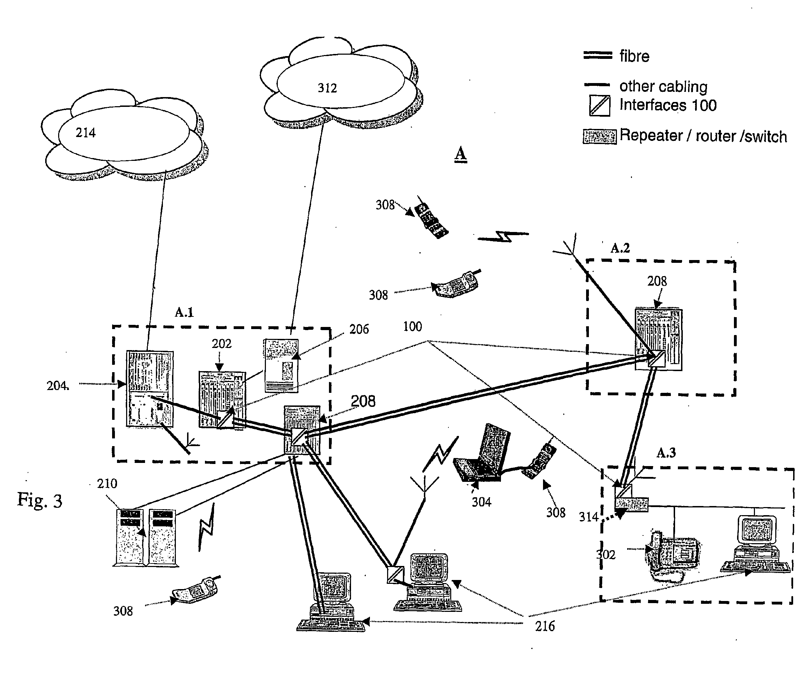

Fig. 1 shows an overview of interface 100, an optical interface, for the integrated digital and radio signal transmission. There can be one or more interfaces 100 within the LAN equipment, each interface connected to at least one standard optical unit 106, e.g. standard optical connectors to an optical fibre cable 118. There can be more than one cable 118. The cable 118 is containing optical fibre(s), which distributes signals to LAN equipment at different locations or the same location, e.g. within a building or a campus area, see Fig. 2 and Fig. 3. Each interface 100 has at least one common/integrated - standard optical transceiver unit (TRx) 102. The radio signals can be fed/received to/from the optical units 106 over an external electrical RF port 104. In order to combine and or split the radio signals to more than one antenna or feed into more than one optical TRx 102 (star architecture) external radio signal splitter(s)/combiner(s) can be used. The RF port 104 is connected to a radio unit 112 over signal path 120, e.g. with coax cable. The radio signal path could be a direct connection to the optical transceiver unit 102 but could also contain some radio frequency specific processing like: filters, amplifiers, splitters and combiners, duplexer, etc. In general the interface 100 is transparent if no radio mode specific filters, amplifiers, etc, are used in radio unit 112. If simultaneous digital and radio signal transmission is used over a single transceiver unit 102, a splitter 108 and signal combiners 110 are needed in order to separate the digital and radio signal. The splitter and combiner may need filters in order to prevent signal distortion from the digital into the radio band and vice versa.

The base station(s) (BSs) (e.g. for GSM/UMTS) or the remote antenna unit(s) are connected over coax cables to the electrical RF In/Output port(s) 104. The interface 100 is in general transparent to the digital and radio signal transmission within the bandwidth of the optical link. Low bit rate data transmission for alarm and controlling function between the base station and the connected LAN equipment may be utilised over:
• The 104 interface(s)
• Separate digital interface which could connect directly to the motherboard of the LAN equipment

A digital interface 116 connects the LAN cards (Gigabit Ethernet card or the interface card 100) to the motherboard, back plane, of the LAN Central Processing Unit (CPU), e.g. switch, hub, router, etc. The motherboard is normally fulfilling tasks like: controlling of the LAN cards, encryption, addressing, digital signal processing, etc. For the radio signal the alarming and controlling function in case of failure could be implemented processed in the motherboard.

Fig. 2 shows a FDDI backbone network 200 with interface 100 that allows distribution of the digital and radio signal to different buildings A, B, and C that are connected via an FDDI ring 222. The interface 100 is integrated in the FDDI equipment 202 and 218. Unit 202 can be a FDDI switch or router. In the Fig.2 the switch 202 is a router that is connected to a public Wide Area Network (WAN) 212 over a firewall 206. The unit 218 could be an FDDI switch, router or concentrator. In building A radio base station 204 RF output signal is fed into the interface card 100 located in the FDD router 202. After the electrical to optical conversion in the interface(s) 100 the radio signal is, together with the digital signal, transmitted to the different buildings A, B, and C in the campus area. For clarity only one interface 100 is shown at each FDDI device, however, for each point-to-point connection of two FDDI devices a separate interface 100 is needed.

Within the buildings A, B, and C the radio signal can be in general further distributed, as shown in Fig. 3, using e.g. an Ethernet fibre architecture. The Ethernet switch/router 208 in building A is connected to the radio base station over an interface 100 in the FDDI equipment 202.

In building B the FDDI concentrator 218 is connected to application servers 210 and to remote antennas 220 over the interface(s) 100. More than one antenna can be connected to one interface 100 by using either external or internal splitter/combiner.

In Building C computers 216 and remote antennas are connected to the FDDI equipment, where similar to building B the interface(s) 100 RF port(s) 104 is used to connect to the antennas.

The interface 100 in general is applicable to any LAN architecture, e.g. a mixture of Ethernet, Token Ring and FDDI, when deploying fibre for the data transmission.

Fig. 3 shows an example of the interface 100 within an Ethernet infrastructure, see also Fig. 2 building A. We assume full duplex mode for the fibre Ethernet architecture, one fibre for transmit and one fibre for receive.

The Ethernet switch 208 in location A.1 is connected over the FDDI router 202 to the radio base station but could be in general directly connected to the radio base station 204 over coax cable. If the Ethernet devices are equipped with interface(s) 100 the radio signal can be distributed within the building to different locations A.1 and A.2. The digital and radio signals may use:
• the same fibre and optical transceiver unit 102,
• the same fibre and different optical transceiver units 102, e.g. use Wavelength Division Multiplexing (WDM) with optical filters, or
separate fibres and separate transceiver units.

Location A.1 comprising a firewall 206, which is connected to Internet (WWW) 312, the base station (BS) 204, e.g. GSM/UMTS, connected to the GSM network 214 another Ethernet switch 208, another application server 210, and computers 216. In location A.1 one of the computers 216 is connected to the interface 100 in the Ethernet switch 208. The interface 100 at the stationary terminal could be, e.g. an external fibre-to-coax media converter box. Different mobiles 308, which are connected to the base station over the remote antennas, are indicated in the figure.

If the computers 216 intend to send radio signals they are connected to the interface 100 in the Ethernet switches 208 otherwise the computers 216 are connected direct to the Ethernet switches 208. A portable laptop 304 is physically connected to a mobile terminal 308, such as GSM/UMTS terminal, which in its turn is in contact with the base station 204 via the concentrator 202.

The Ethernet equipment 208 in location A.2 is connected to the Ethernet equipment 208 in location A.1 over the interface 100. The Ethernet switch in location A.2 connects further to a repeater/router/switch 314 in location A.3 over interfaces 100 at both locations. The repeater/router/switch 314 in location A.3 connects to a stationary IP telephone 302, and a stationary computer 216 (in radio mobiles are often called terminals!). Remote antennas are connected to the interfaces 100 in location A.2 and A.3 The interface 100 could in general support multiple radio systems over a single interface 100 if the radio systems work at different frequencies, e.g. GSM operating at 1.8 GHz and UMTS operating at 2 GHz.

Depending on the radio system, remote antenna network system, number of antennas, cell size, environment, etc the radio signal may need external amplifiers, filters and combiners for the radio uplink and downlink between the interface 100 and the remote antennas.

The interface 100 can be built in different ways:
• The interface 100 has more than one optical transceiver unit 102. One TRx unit 102 could be used for the digital transmission and one for the radio transmission. Two optical TRx units may be built in for redundancy purposes.
• Each optical TRx unit 102 has its own Rx and Tx optical output for the transmit and receive paths although only one optical fibre may be used as the signal can be split and combined in the optical domain using wavelength division multiplexing technology.

In general the interface 100 is similar to a standard digital LAN equipment card (e.g. Gigabit Ethernet card), which can be plugged in to the motherboard of the LAN switch/router (e.g. Gigabit Ethernet switch). It is also possible to integrate the interface 100 in external LAN media converters (optical-to-electrical converter). In Fig. 3 like in Fig. 2 only one interface 100 is shown at each Ethernet equipment, for clarity, although for every point-to-point connection between Ethernet devices a separate interface card 100 is needed.

Some processing of the radio signal can be implemented in the radio unit 112 (e.g. filtering, amplification, etc). This radio signal processing could be done at RF or at an intermediate frequency. If it is done at an intermediate frequency up- and down converters are needed. The radio signal could be sent at an intermediate frequency over the fibre network, using e.g. frequency down converter at the LAN interface 100 connected to the base station and frequency up converters at the interfaces 100 connecting to the remote antenna units. At intermediate frequencies the radio signal experiences less loss in the optical link. In the US patent 6,157,810, J. B. Georges and D. M. Cutrer, "Distribution of radio-frequency signals through low bandwidth infrastructures", an intermediate frequency is used to distribute radio signals between the base station and remote antennas.

The RF signal uses an input and output radio frequency port 104. It could also be just a single RF connector and the transmit/receive signal could be split in the radio signal path 120 using radio duplexers.

Another example where the interface 100 may be of future interest are Ethernet based Metropolitan Area Networks (MANs). Ethernet based MANs show a growing popularity. Similar to Fig. 2 an Ethernet based Fibre-to-the-Subscriber (FTTS) architecture can be used to distribute radio signals, e.g. to individual houses/buildings A, B, and C, using the interface 100.

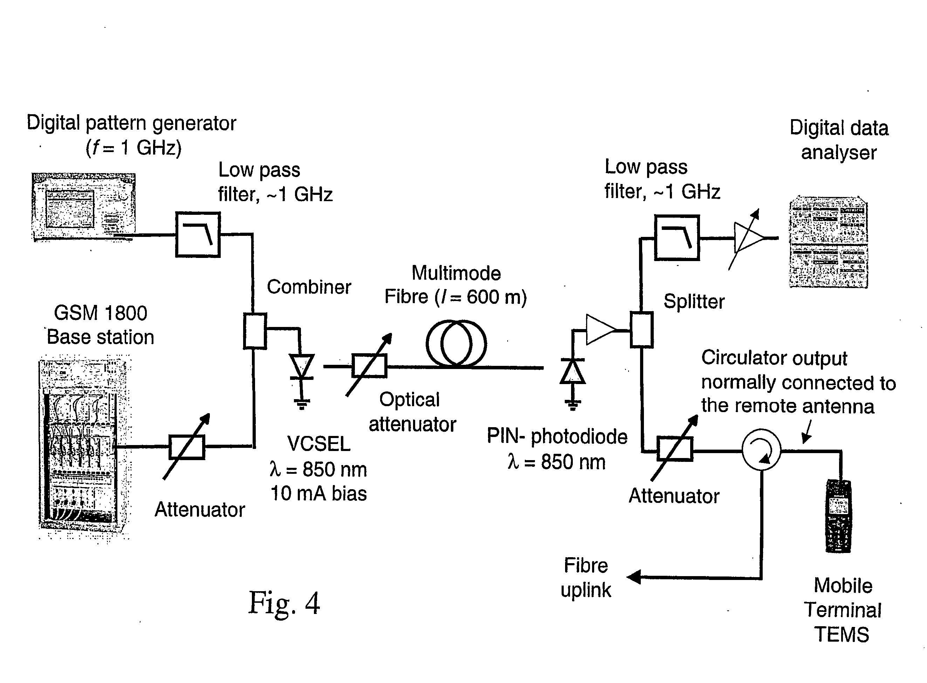

A set-up according to Fig. 4 has been used for showing how the interface works. The interface has been made using standard Gigabit Ethernet LAN equipment. Penalty free simultaneous GSM-1800 and 1 Gbit/s digital data transmission are established over the same optical link in the set-up in Fig. 4. In the Gigabit Ethernet, when using multi-mode fibres, fibre lengths up to 550 meters may be used. This is the minimum operational range requirement for operation at short wavelengths of 850 nm. Multi-mode fibre, although having higher losses and dispersion compared to single-mode fibre, allows the use of potential cheap optical transceiver units. The interface in general can be used for any type of fibre, laser and radio system. However, the multi-mode fibre in combination with Vertical Cavity Surface Emitting Laser (VCSEL) and the simultaneous digital - radio transmission puts the highest constraints on the interface link budget. For all the other types of lasers and fibres, as recommended in the LAN standards, the link performance can be expected to be better for such fibre lengths.

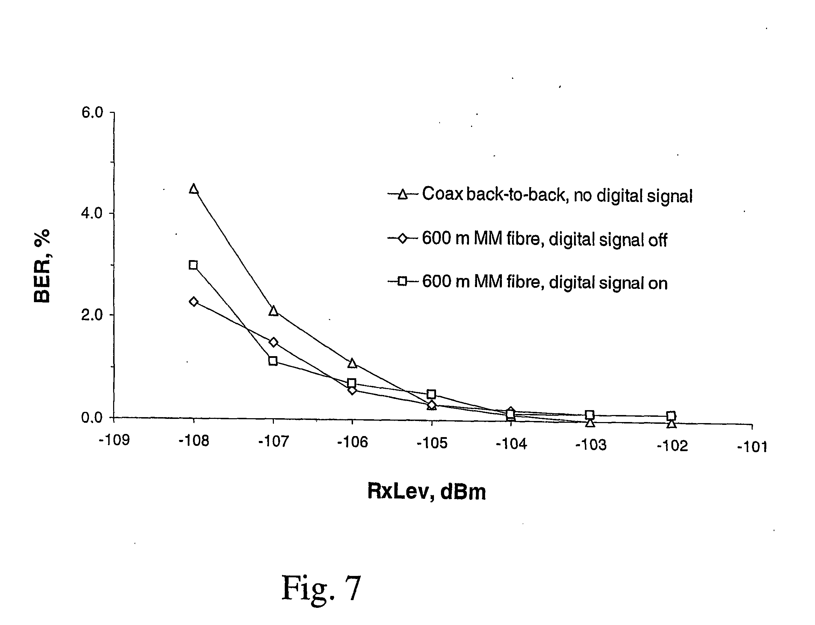

A transmission from GSM-1800 and 1 Gigabit/s digital data over a single optical link using 600 meters MM fibre has been used. From the maximum input power, loss and noise, Fig. 7, of the fibre radio system a link budget calculation has been done for a typical GSM in-building system considering cell-size per antenna and radio path loss for different indoor environments. The fibre radio system like used in the set-up showed to have sufficient dynamic range for typical GSM in-building distributed antenna systems even in the case if more than one carrier is send over the link.

In the set-up, Fig. 4, a low-cost commercially available un-cooled 850 nm VCSEL and PIN photodiode with preamplifier are used, e.g. Mitel 1A448 SC-2A, 8C478 SC-2A. These components are designed for Gigabit Ethernet applications. The MMF length is 600 m in order to comply with the minimum range requirements in the 1000Base-SX Gigabit Ethernet recommendations. The MMF is Corning's InfiniCor 600 multi-mode 50/125 Om fibre designed for Gigabit Ethernet transmission, 600 m at 850 nm using laser sources. The 1 Gigabit/s non-return-to-zero pseudorandom bit sequence signal, PRBS = 2²³ - 1, Anritsu MP 1604B, and the GSM radio signal operating at 1800 MHz, Ericsson RBS 2202, are combined using a 6 dB power combiner operating from DC - 2 GHz. The bias current of 10 mA and the combined digital, *Vₚₚ* = 0.3 V, and radio signal, *Vₚₚ* = 0.4 V, are fed to the VCSEL using a bias tee.

After transmission through the fibre the signals are split into a digital and radio path. The bit error rate (BER) of the digital signal was measured after low pass filtering and amplification using a bit error test set, Anritsu MP 1605B. The data transmission speed of 1 Gbit/s was chosen as the available low pass filters had a cut-off frequency of about 1 GHz. At the transmitter site it was necessary to limit the output spectrum of the digital signal entering the GSM band, and at the receiver site to limit the GSM signal to enter the broadband receiver of the bit error test set.
• The BER of the radio signal was measured with an Ericsson test mobile station (TEMS) for GSM. The circulator separated the radio downlink and uplink path. The remote antenna would be normally connected to the circulator output as indicated in the figure.

The following characteristics have been measured in order to quantify the optical link for the combined analogue - digital transmission:
• Fibre link parameters
• Intermodulation attenuation
• Blocking characteristics
• BER for the digital and analogue transmission

From these parameters the dynamic range of the optical link is calculated. The dynamic range is then compared with dynamic range requirements measured at typical indoor GSM Distributed Antenna System (DAS) installations.

For the used fibre link the following RF parameters have been measured:
• The 1 dB compression point is at ~5dBm RF input power to the laser
• RF loss of - 25dB at 1.8GHz, e.g. for GSM, and 29dB at ~2 GHz, e.g. for UMTS, for 600 metre MM fibre
• Output noise power at optical receiver ~ -141dBm/Hz (for 200 kHz BW this corresponds to ~ -88dBm)

The laser was biased at 10 mA which corresponded to a laser output power of --10 dBm. The optical attenuation is < 2.5 dB at λ = 850 nm.

The intermodulation attenuation of the link is measured by applying a GSM signal and an interfering CW signal at 30dB below the power level of the wanted signal (GSM 05.05 paragraph 4.7.2. reference [GSM specification GSM 05.05]). This measurement is relevant for the downlink as the nonlinear elements in the transmitter path cause distortion if more than one RF channel is transmitted. The standard requires the IMD product not to exceed -70dBc or -36dBm whichever is the higher.

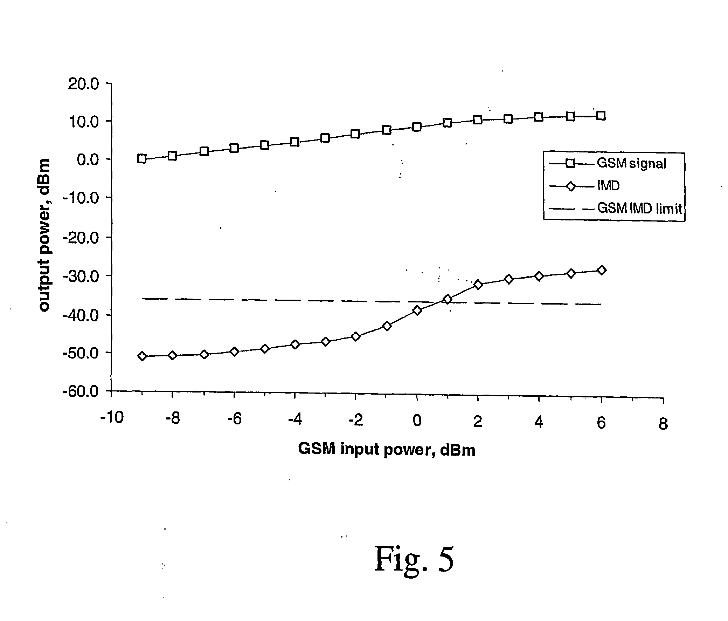

For indoor DAS-GSM installations the input power at the antenna connector is typically about 10 dBm/carrier. Fig. 5 shows the measured IMD power versus the input power of the wanted GSM signal. A post-amplifier with a gain of ~34 dB after the receiver has been used to boost the output power. It can be seen that the maximum RF input power to the laser should be <1 dBm in order not to exceed the -36dBm maximum allowed IMD.

The blocking characteristic is a measure of the uplink ability to receive a wanted signal at its channel frequency in the presence of a strong unwanted signal, below a specified limit, on other frequencies without degradation of the performance.

Since the fibre link in the uplink can be considered as the input "amplifier" to the base station receiver, and because a GSM-1800 BS is used in this set-up, the blocking characteristics are measured according to the GSM 05.05 specification, section 5.1. The signal level of a wanted GSM signal is set 3 dB above the BS receiver sensitivity limit (including the interface link with 600-meter MM fibre) and the unwanted sine wave (800 kHz away from the GSM signal) signal level is increased until the BER shows impairments. The power of the unwanted sine wave could be increased up to ~5 dBm, at the input of the laser, without impairing the BER in the wanted GSM signal.

The BER penalty of the fibre link for the digital and radio transmission has been measured, in order to understand if the link caused distortions degrade the radio and optical receiver sensitivity levels.

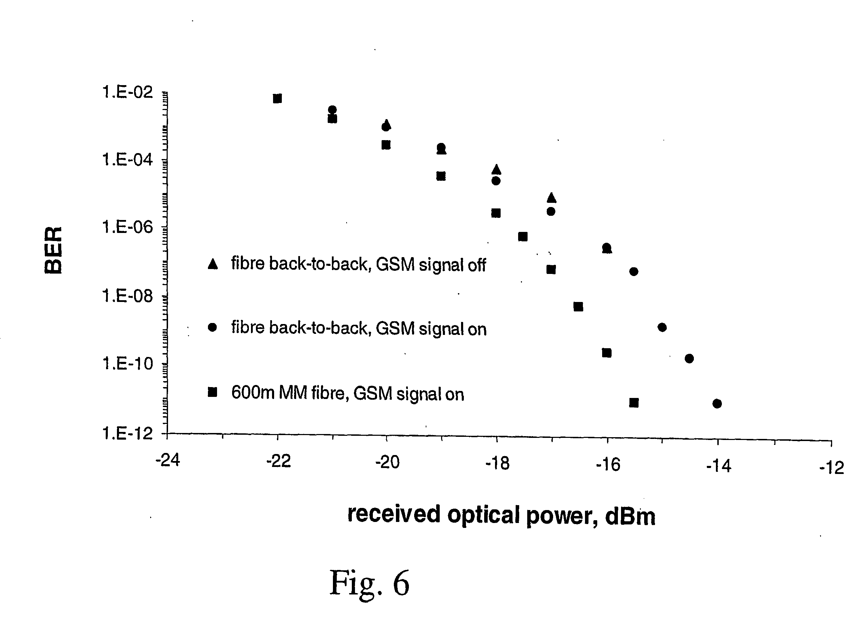

The BER of the 1 Gbit/s digital signal versus optical received power is shown in Fig. 6. The optical attenuator after the laser was used to reduce and balance the received power. The results are shown for the fibre back-to-back case, ~7 m MM fibre, with the GSM signal switched off and switched on, and for the 600 m MM fibre with the GSM signal switched on. No penalty could be observed for the simultaneous digital and radio signal transmission. Indeed the measured BER for the 600 m MM fibre with simultaneous radio transmission showed slightly better receiver sensitivity than the back-to-back cases. This difference could also be observed by repeating the measurements. One reason for this observation may be the restricted laser launch condition used in the set-up, as equilibrium mode distribution may be not reached over such a short fibre length. The achieved receiver sensitivity is ~ -15.5 dBm for a BER of 10⁻¹¹.

For the BER measurement on the GSM 1800 signal the optical attenuator was set to zero as the electrical attenuator in front of the TEMS receiver was used to reduce and balance the received signal level (RxLev). The raw BER in the radio downlink was measured on the radio broadcast channel. Fig. 7 shows the BER as a function of received power for back-to-back case using coaxial cable, coax cable ~6 m, 600 m MM fibre with the digital signal switched off and with the radio and digital signal running simultaneously. No BER penalty is observed for the simultaneous radio and digital transmission over the 600 m MMF. The fibre back-to-back transmission showed similar BER values to the 600 m MM fibre transmission and the measurement points have been omitted in the figure for clarity. For input powers > -102 dBm no BER could be measured within the resolution given by the TEMS equipment. The reference sensitivity level for GSM 1800 terminals and base stations is -102 and -104 dBm respectively, with the maximum BER depending on the type of channel, e.g. data channel BER ≤ 0.1%, /3/. The back-to-back case using coax cable showed slightly larger BERs than the radio over fibre transmission. This difference is within the resolution of the used TEMS equipment.

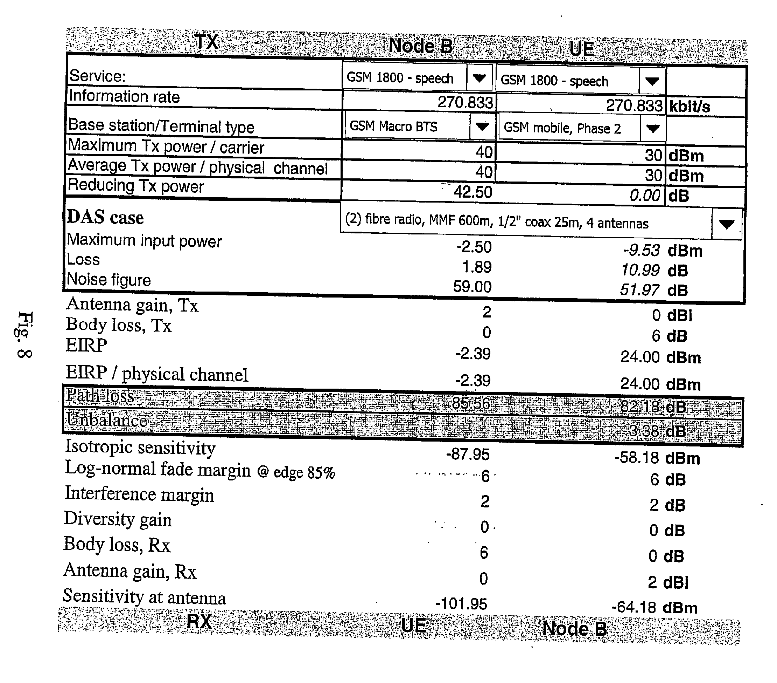

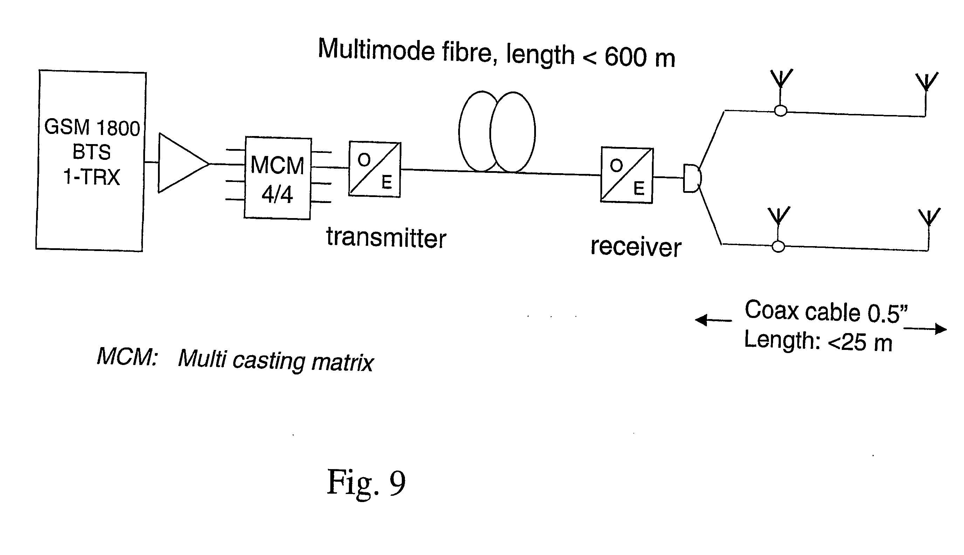

For the parallel digital - GSM signal transmission, the 1dB compression point limits the maximum input power to the laser. From the maximum input power, loss and noise figure of the fibre radio system we could do a link budget calculation for a typical GSM in-building system, as shown in Fig. 8. In the link budget calculation is made for the loss and noise of the signal from one optical feeder (interface 100) when considering 4 remote antennas, see Fig. 9.

The radio uplink limits the maximum path loss for the fibre radio system (Fig. 4) to about 82 dB. The link budget as given in Fig. 8 is just an indication and could be optimised, for example by carefully placing of the remote antenna units in order to prevent high signal levels at the radio uplink in order to increase the gain in the first amplifier.

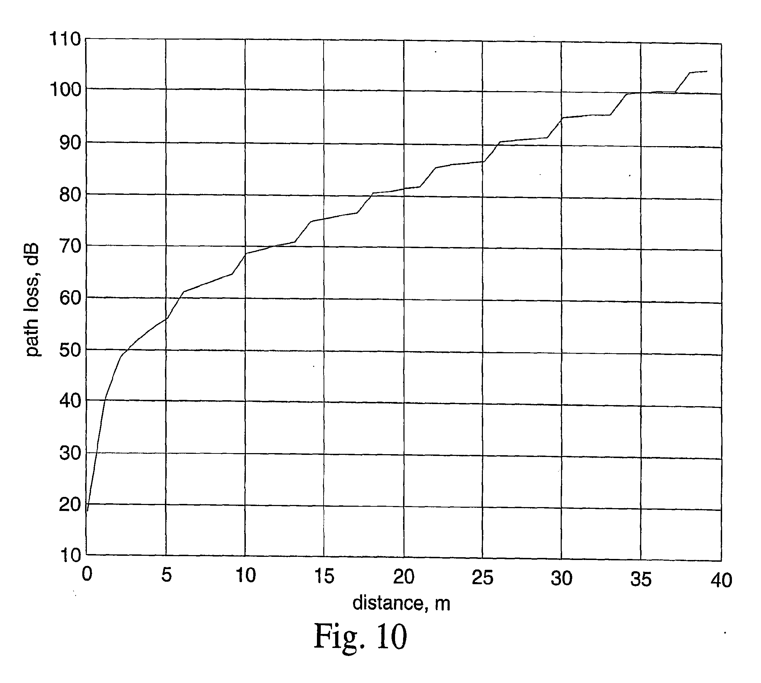

For indoor environments the path loss can be estimated using the Multiple Wall Model as described in the COST Action 231 [COST Action 231, "Digital mobile radio towards future generation systems," final report 1999.]. By taking a room size of 4 metres and allowing for a surface outage of 5% the path loss a shown in Fig. 10 could be computed. The maximum cell radius for 82 dB path loss is about 20 m. In current indoor distributed antenna installations cell radii between ~15 to ~25 m are quite common.

The system link budget can be increased by about 6 dB if using separate optical transceiver units for the digital and radio transmission. If transmitting more than one GSM carrier and if using just one laser the RF input power has to be decreased by ~20×log(#carriers), in order to prevent signal clipping.

The interface architecture is in general scalable to any future LAN standard, as the radio and digital signal may be fed to separate optical transceiver units within the LAN equipment, e.g. one interface 100 with multiple 102. interfaces. For future LAN standards the optical transceivers and fibres will be able to support higher digital data rates. This in turn will be beneficial to interface, as e.g. the link budget for the radio transmission will increase. The interface can be used for future radio standards.

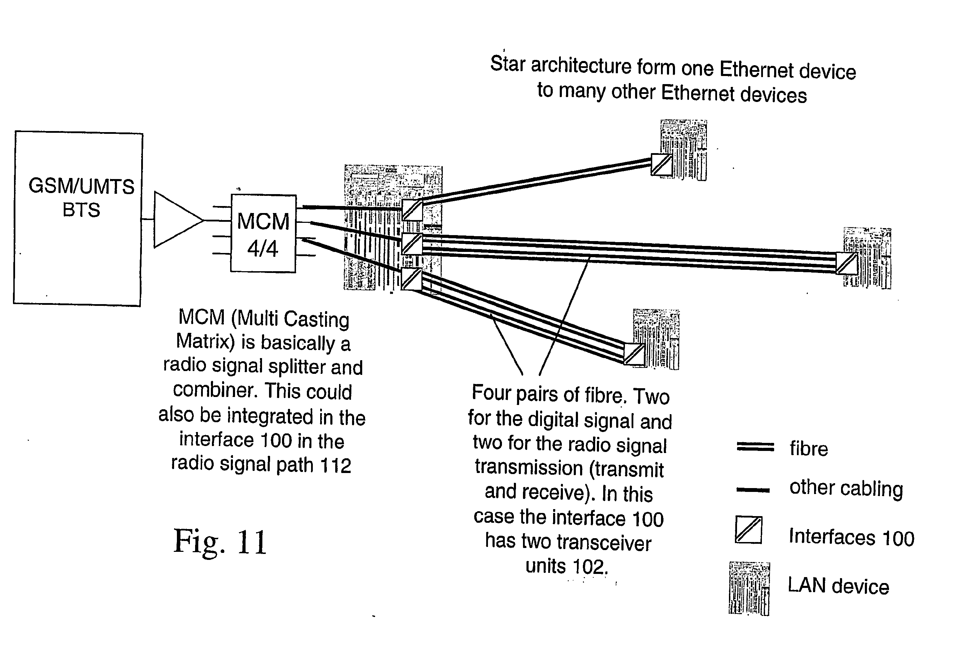

Fig. 11 shows how the radio signal from a GSM/UMTS base station may be feed to numerous interface 100 cards in the LAN equipment using a external 4/4 multicasting matrix. A star architecture can be built up with remote antennas connected to the LAN equipment with interface(s) 100. In the figure is also indicated the digital and radio signal transmission over separate fibre pairs using separate TRx units 102 in the interface 100.

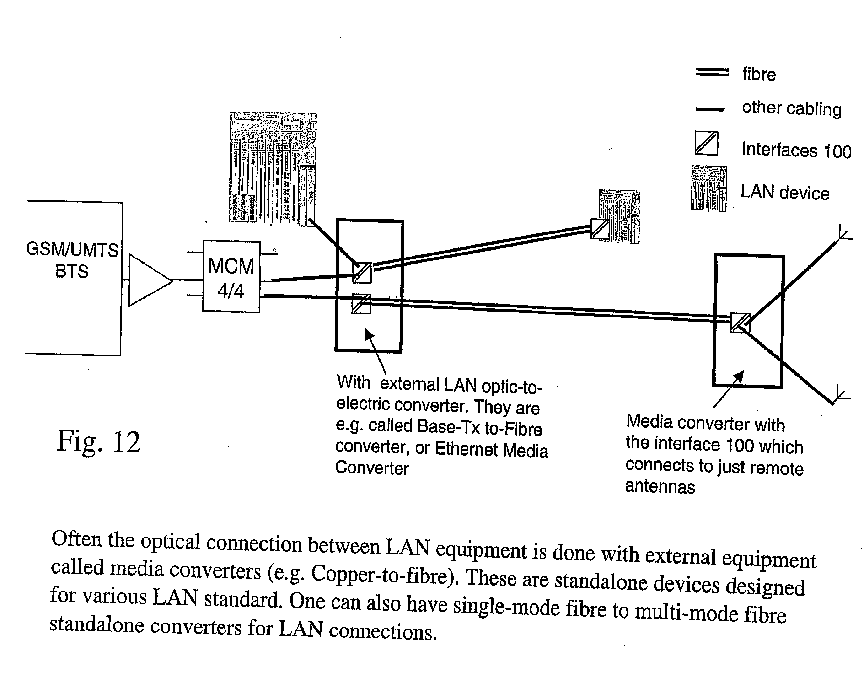

Fig. 12 shows an example how external media converters designed for LAN transmission may be used to integrate the interface 100 with remote antennas.

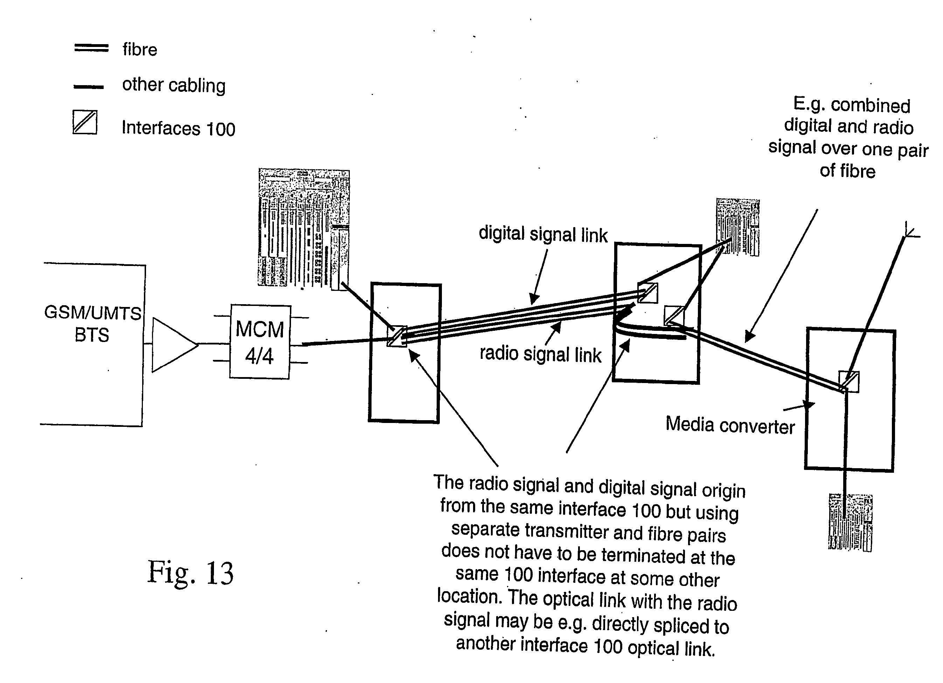

Fig. 13 shows one set-up where the radio and digital signal origin from the same interface 100 but using separate transmitter and fibre pairs. The fibre pairs do not have to be terminated at the same interface 100 they could be terminated at some other location. The optical link with the radio signal may be e.g. directly spliced to another interface 100 optical link.

Obviously, numerous modifications and variations of the present invention are possible in light of the above teachings. Therefore to be understood that within the scope of the appended claims, the present invention may be practiced otherwise than specifically described herein.

## Claims

1. A digital and analogue Radio Frequency, RF, interface (100) for communication to and from a local area network, the radio signals in the local area network being digital and analogous, and the interface (100) is connectable to the local area network which has an optical fibre net (222), a radio base station (204) and at least one remote antenna unit (220), which are connected to the local area network, **characterised in that** the interface (100) is adapted to simultaneously handle digital and analogous radio signals, and comprises at least one transceiver unit (102) and at least one RF port (104), where the transceiver unit (102) is connected to the RF port (104) for distribution of the radio signals fed/received to/from the transceiver unit (102) over the RF port (104) from/to the radio base station (204) with further distribution to equipment (202, 208) or terminals (216, 302, 304, 308) or network (214, 312) or remote antenna unit/units (220) connected by coax cable/cables.

2. An interface according to claim 1, **characterised in that** the transceiver unit (102) is arranged to use digital and analogue signals in the transceiver unit (102).

3. An interface according to claim 1 or 2, **characterised in that** the transceiver unit (102) is connectable to an optical unit (106) connected to a fibre cable (118).

4. An interface according to any of above claims, **characterised in that** the RF port (104) is connected to signal path (120) which is connected to a radio unit (112) when the same transceiver unit (102) is used.

5. An interface according to claim 3, **characterised in that** the interface (100) comprises a signal splitter (108) and signal combiner (110).

6. An interface according to claim 4 or 5, **characterised in that** the interface (100) comprises a digital interface (116), which is connectable to a motherboard of a switch, a hub, a router, etc. (208, 314), where the motherboard, for the digital signal, is performing the controlling of all interface, encryption, addressing, alarm, and controlling functions for the radio signals.

7. A system comprising a Backbone network (200), a local area network comprising an optical fibre net (222), a radio network for transmission of digital and analogous radio signals, equipment (202, 208), radio base stations (204), terminals (216, 302, 304, 308) and at least one remote antenna unit (220), **characterised in that** the system comprises at least one digital and analogue Radio Frequency, RF, interface (100) which is connected to the backbone network (200) and adapted to simultaneously handle digital and analogous radio signals, and **in that** the interface (100) comprises at least one transceiver unit (102) and at least one RF port (104), where the transceiver unit (102) is connected to the RF port (104) for distribution of the radio signals fed/received to/from the transceiver unit (102) over the RF port (104) from/to the radio base station (204) with further distribution to the equipment (202, 208) or the terminals (216, 302, 304, 308) or network (212, 214, 312) or remote antenna unit/units (220) connected by coax cable/cables.

8. A system according to claim 7, **characterised in that** the interface (100) is connectable to a main switch, a repeater, a hub, or an external LAN media converter device.

9. A system according to claim 8, **characterised in that** the main switch is an Ethernet switch or an FDDI switch.

## Patentansprüche

1. Schnittstelle (100) für digitale und analoge Funkfrequenz, RF, für Kommunikation zu und von einem lokalen Netz, wobei die Funksignale in dem lokalen Netz digital und analog sind und die Schnittstelle (100) mit dem lokalen Netz verbindbar ist, das ein optisches Fasernetz (222), eine Funkbasisstation (204) und wenigstens eine entfernt angeordnete Antenneneinheit (220) hat, die mit dem lokalen Netz verbunden sind, **dadurch gekennzeichnet, dass** die Schnittstelle (100) dazu ausgebildet ist, gleichzeitig digitale und analoge Funksignale zu handhaben und wenigstens eine Senderempfängereinheit (102) und einen RF-Anschluss (104) aufweist, wobei die Senderempfängereinheit (102) mit dem RF-Anschluss (104) für Verteilung der Funksignale, die zu/von der Senderempfängereinheit (102) über den RF-Anschluss (104) von/zu der Funkbasisstation (204) mit weiterer Verteilung zu Ausrüstung (202, 208) oder Endgeräten (216, 302, 304, 308) oder Netz (214, 312) oder entfernter/entfernten Antenneneinheit/einheiten (220), die durch Koaxialkabel verbunden ist/sind, zugeführt/empfangen werden.

2. Schnittstelle nach Anspruch 1, **dadurch gekennzeichnet, dass** die Senderempfängereinheit (102) dazu ausgebildet ist, digitale und analoge Signale in der Senderempfängereinheit (102) zu verwenden.

3. Schnittstelle nach Anspruch 1 oder 2, **dadurch gekennzeichnet, dass** die Senderempfängereinheit (102) mit einer optischen Einheit. (106) verbindbar ist, die mit einem Faserkabel (118) verbunden ist.

4. Schnittstelle nach einem der obigen Ansprüche, **dadurch gekennzeichnet, dass** der RF-Anschluss (104) mit einem Signalpfad (120) verbunden ist, der mit einer Funkeinheit (112) verbunden ist, wenn dieselbe Senderempfängereinheit (102) verwendet wird.

5. Schnittstelle nach Anspruch zu, **dadurch gekennzeichnet, dass** die Schnittstelle (100) einen Signalaufspalter (108) und einen Signalkombinierer (110) aufweist.

6. Schnittstelle nach Anspruch 4 oder 5, **dadurch gekennzeichnet, dass** die Schnittstelle (100) eine digitale Schnittstelle (116) aufweist, die mit einer Hauptplatine eines Schalters, eines Hubs, eines Routers usw. (208, 314) verbindbar ist, wobei die Hauptplatine für das digitale Signal die Steuerung aller Schnittstellen-, Verschlüsselungs-, Adressierung-, Alarm- und Steuerfunktionen für die Funksignale durchführt.

7. System, das ein Backbone-Netz (200), ein lokales Netz, das ein optisches Fasernetz (222) aufweist, ein Funknetz für Übertragung von digitalen und analogen Funksignalen, Ausrüstung (202, 208), Funkbasisstationen (204), Endgeräte (216, 302, 304, 308) und wenigstens eine entfernte Antenneneinheit (220) aufweist, **dadurch gekennzeichnet, dass** das System weeinz Schnittstelle (100) für digitale und analoge Funkfrequenz, RF, aufweist, die mit dem Backbone-Netz (200) verbunden ist und dazu ausgebildet ist, gleichzeitig digitale und analoge Funksignale zu handhaben, und dass die Schnittstelle (100) wenigstens eine Senderempfängereinheit (102) und wenigstens einen RF-Anschluss (104) aufweist, wobei die Senderempfängereinheit (102) mit dem RF-Anschluss (104) für Verteilung der Funksignale verbunden ist, die zu/von der Senderempfängereinheit (102) über den RF-Anschluss (104) von/zu der Funkbasisstation (204) mit weiterer Verteilung zur Ausrüstung (202, 208) oder den Endgeräten (216, 302, 304, 308) oder Netz (212, 214, 312) oder einer oder mehreren Antenneneinheiten (220), die durch ein oder mehrere Koaxialkabel verbunden sind, zugeführt/empfangen werden.

8. System nach Anspruch 7, **dadurch gekennzeichnet, dass** die Schnittstelle (100) mit einem Hauptschalter, einem Repeater, einem Hub oder einer externen LAN-Medienwandlereinrichtung verbindbar ist.

9. System nach Anspruch 8, **dadurch gekennzeichnet., dass** der Hauptschalter ein Ethernet-Schalter oder ein FDDI-Schalter ist.

## Revendications

1. Interface (100) en Radio Fréquence numérique et analogique, RF, pour communication à destination et en provenance d'un réseau local, les signaux radio dans le réseau local étant numériques et analogiques, et l'interface (100) est connectable au réseau local qui comprend un réseau de fibre optique (222), une station radio de base (204) et au moins une unité d'antenne distante (220), qui sont connectés au réseau local, **caractérisée en ce que** l'interface (100) est prévue pour gérer simultanément des signaux radio numériques et analogiques, et comprend au moins une unité d'émission - réception (102) et au moins un port RF (104), l'unité d'émission - réception (102) étant connectée au port RF (104) pour distribution des signaux radio émis / reçus vers / à partir de l'unité d'émission-réception (102) par l'intermédiaire du port RF (104) en provenance / à destination de la station radio de base (204) avec encore une distribution à des équipements (202, 208) ou à des terminaux (216, 302, 304, 308) ou à un réseau (214, 312) ou à une unité / des unités d'antenne distantes (220) connectées par un câble / des câbles coaxiaux.

2. Interface selon la revendication 1, **caractérisée en ce que** l'unité d'émission-réception (102) est agencée pour utiliser des signaux numériques et analogiques dans l'unité d'émission-réception (102).

3. Interface selon la revendication 1 ou 2, **caractérisée en ce que** l'unité d'émission -réception (102) est connectable à une unité optique (106) connectée à un câble de fibres (118).

4. Interface selon une quelconque des revendications précédentes, **caractérisée en ce que** le port RF (104) est connecté à un chemin de signal (120) qui est connecté à une unité radio (112) lorsque la même unité d'émission-réception (102) est utilisée.

5. Interface selon la revendication 3, **caractérisée en ce que** l'interface (100) comprend un diviseur de signal (108) et un combineur de signal (110).

6. Interface selon la revendication 4 ou 5, **caractérisée en ce que** l'interface (100) comprend une interface numérique (116), qui est connectable à une carte-mère d'un commutateur, un concentrateur, un routeur, etc. (208, 314), dans laquelle la carte-mère, pour le signal numérique, effectue la commande de toutes les fonctions d'interface, de codage, d'adressage, d'alarme et de contrôle pour les signaux radio.

7. Système comprenant un réseau de base (200), un réseau local comprenant un réseau de fibre optique (222), un réseau radio pour transmission de signaux radio numériques et analogiques, des équipements (202, 208), des stations radio de base (204), des terminaux (216, 302, 304, 308) et au moins une unité d'antenne distante (220), **caractérisé en ce que** le système comprend au moins une interface en Radio Fréquence numérique et analogique RF (100) qui est connectée au réseau de base (200) et prévue pour traiter simultanément des signaux radio numériques et analogiques, et **en ce que** l'interface (100) comprend au moins une unité d'émission - réception (102) et au moins un port RF (104), l'unité d'émission - réception (102) étant connectée au port RF (104) pour distribution des signaux radio émis/ reçus vers / à partir de l'unité d'émission-réception (102) par l'intermédiaire du port RF (104) en provenance / à destination de la station radio de base (204) avec encore une distribution à des équipements (202, 208) ou à des terminaux (216, 302, 304, 308) ou à un réseau (212, 214, 312) ou à une unité / des unités d'antenne distantes (220) connectées par un câble / des câbles coaxiaux.

8. Système selon la revendication 7, **caractérisé en ce que** l'interface (100) est connectable à un commutateur principal, un répéteur, une concentrateur ou un dispositif convertisseur de média de réseau local externe,

9. Système selon la revendication 8, **caractérisé en ce que** le commutateur principal est un commutateur Ethernet ou un commutateur FDDI
